# EUROPEAN PATENT SPECIFICATION

(11) **EP 3 611 823 B1**
(45) Date of publication and mention of the grant of the patent: **09.12.2026**
(21) Application number: 19192169.1
(22) Date of filing: 16.08.2019
(51) Int. Cl.: H02K 1/18, H02K 21/24, H02K 1/2796

(54) **MOTOR STATOR ASSEMBLY, SYNCHRONOUS MOTOR AND PASSENGER TRANSPORT DEVICE**
MOTORSTATORANORDNUNG, SYNCHRONMOTOR UND PERSONENTRANSPORTVORRICHTUNG
ENSEMBLE STATOR DE MOTEUR, MOTEUR SYNCHRONE ET DISPOSITIF DE TRANSPORT DE PASSAGERS

(30) Priority: 16.08.2018 CN 201810933349
(43) Date of publication of application: 19.02.2020
(73) Proprietor: Otis Elevator Company, Farmington, Connecticut 06032 (US)
(72) Inventor: LI, Lib, Shanghai, Shanghai 201203 CN (CN)
(74) Representative: Dehns

(56) References cited:
- WO-A2-2008/068503
- CN-A- 105 305 665
- DE-A1- 10 253 072
- JP-A- 2006 094 664
- JP-A- 2008 092 735
- JP-A- 2011 182 576
- JP-A- 2018 029 421
- JP-B2- 5 636 976

## Description

### FIELD OF THE INVENTION

The present disclosure relates to the field of electric motors, and in particular to a synchronous motor that generates an axial magnetic field, and components thereof.

### BACKGROUND OF THE INVENTION

With continuous improvement of the performance of permanent magnetic materials such as rare earths, permanent-magnet synchronous motors featuring high efficiency and high power density have been rapidly developed, and have been widely used in many industrial fields such as elevators and automobiles.

Permanent-magnet synchronous motors are generally classified into axial magnetic field type permanent-magnet synchronous motors and radial magnetic field type permanent-magnet synchronous motors. The axial magnetic field type permanent-magnet synchronous motor not only has the characteristics of short axial dimension, small volume and compact structure, but also has obvious advantages in many special applications due to its high torque density and high efficiency, and has become a research hotspot. It is mainly used in motion control, and is especially suitable for direct drive applications where there is a requirement on lower axial size and a large torque demand, such as elevator drive motor.

For such motors, an overall maintenance is required to repair or replace parts. For example, if there is a problem with the stator, the entire stator needs to be replaced, and the repair is relatively complicated. DE10253072 discloses a component which has a carrier having insertion sections to accommodate coils. WO2008/068503 discloses an axial flux electrical machine having a rotor rotatable about an axis. JP5636976 discloses an axial gap type rotating machine capable of suppressing generation of vibration and thermal stress in a fixing part between an armature coil container and an armature core. CN105305665 discloses a rotor and stator assembly which comprises a stator holder and a plurality of iron cores uniformly arranged on the periphery of the stator holder. JP2011182576 discloses a stator which is made by arranging split cores in a frame annularly. JP 2018 029421 A discloses a stator unit, a rotor unit and an annular fixing part which fixes the plurality of stator cores in a state where the coils of the stator are housed in a tube. JP 2008 092735 A discloses a stator in which a fin is arranged between the stator cores, and the cores and the fin are molded with resin to form the stator.

Therefore, how to provide a permanent-magnet synchronous motor and components thereof that are more convenient to service has become an urgent technical problem to be solved.

### SUMMARY OF THE INVENTION

The present disclosure aims to provide a motor stator assembly that is easy to service.

The present disclosure also aims to provide a synchronous motor that is easy to service.

The present disclosure also aims to provide a passenger transport device having a synchronous motor that is easy to service.

In order to achieve the objects of the present invention, a motor stator assembly is provided according to claim 1.

Optionally, a plurality of positioning holes are disposed in the stator end faces of the stator base; wherein in an assembled state, the coil assemblies are embedded in the positioning holes of the stator base; and in a disassembled state, the coil assemblies are removed out of the positioning holes of the stator base.

Optionally, the plurality of positioning holes are uniformly arranged in the stator end faces in a circumferential direction, and the coil assemblies are uniformly embedded in the positioning holes in the circumferential direction.

According to the invention, positioning rings are included, which are sleeved over outer edges of the stator end faces and configured to restrict the coil assemblies from being disengaged radially outward from the receiving space.

According to the invention, positioning protrusions facing the receiving space are circumferentially disposed on the positioning rings, wherein the positioning protrusions are captured between adjacent coil assemblies, and are configured to restrict the coil assemblies from being disengaged radially outward from the receiving space.

Optionally, in addition or alternatively, a drive sleeve extending in an axial direction is disposed in a middle portion of the stator base, and a drive shaft hole is axially disposed in the drive sleeve.

According to the invention, the stator base is integrally formed.

According to the comparative example not covered by the present invention, the stator end faces are formed by connecting a plurality of stator end face sections.

Optionally, in addition or alternatively, the coil assembly includes: a core extending in an axial direction; a coil disposed axially around the core; and a coil base disposed axially around the core; wherein the coil base limits two axial ends of the coil.

Optionally, the core has an isosceles trapezoid-shaped cross section or a sector ring-shaped cross section in the axial direction.

Optionally, the core is formed by laminating ferromagnetic materials.

Optionally, the coil is made of a copper wire coated by an insulating layer.

Optionally, the coil base is made of a flame retardant material having a temperature resistance of no less than 100°C.

In order to achieve the objects of the present disclosure, according to the invention, a synchronous motor is further provided, which is configured to generate an axial magnetic field, the synchronous motor including: the motor stator assembly as described above; a first rotor disc and a second rotor disc respectively disposed on two sides of the stator base in an axial direction; and a drive shaft which passes through the first rotor disc, the motor stator assembly, and the second rotor disc sequentially in the axial direction.

Optionally, the first rotor disc is circumferentially provided with a plurality of permanent magnets on a side thereof facing the stator base; and/or the second rotor disc is circumferentially provided with a plurality of permanent magnets and/or steel magnets on a side thereof facing the stator base.

Optionally, a plurality of mounting slots are disposed in the first rotor disc and/or the second rotor disc, and the plurality of permanent magnets and/or steel magnets are embedded in the mounting slots.

Optionally, the plurality of permanent magnets are arranged in a circumferential direction with positive poles and negative poles being alternated; and/or the plurality of steel magnets are arranged in a circumferential direction with positive poles and negative poles being alternated.

Optionally, in addition or alternatively, a positioning strip is disposed along a circumferential outer side on a side of the first rotor disc and/or the second rotor disc that faces the stator base, and positioning slots are disposed on two sides of the stator base, the positioning strips being fitted into the positioning slots.

Optionally, in addition or alternatively, a middle portion of the first rotor disc and/or the second rotor disc is provided with a matching hole extending in the axial direction for the drive shaft to pass through.

In order to achieve the objects of the present disclosure, according to further another aspect of the present disclosure, a passenger transport device is further provided, which includes the synchronous motor as described above.

According to the motor stator assembly, the synchronous motor and the passenger transport device of the present disclosure, by providing a plurality of coil assemblies inserted in the stator base, the maintenance or replacement can be performed as needed, the maintenance is convenient, and less time-consuming, and also has reliable performances.

### BRIEF DESCRIPTION OF THE DRAWINGS

Unless explicitly stated otherwise, the embodiments and feature combinations disclosed in the following detailed description are embodiments of the claimed invention; any embodiment or feature combination expressly identified as not forming part of the claimed invention is provided for illustrative purposes only.
FIG. 1 schematically illustrates some features of the motor stator assembly according to the invention (e.g. positioning rings (130), positioning protrusions (131), etc.). However, the alternative in which a stator end face (111) is formed by connecting a plurality of separate stator end-face sections (111b, 111c), also disclosed in Fig. 1, does not form part of the claimed invention. and
FIG. 2 is a schematic diagram of an embodiment of a coil assembly according to the present disclosure.

### DETAILED DESCRIPTION OF THE EMBODIMENT(S) OF THE INVENTION

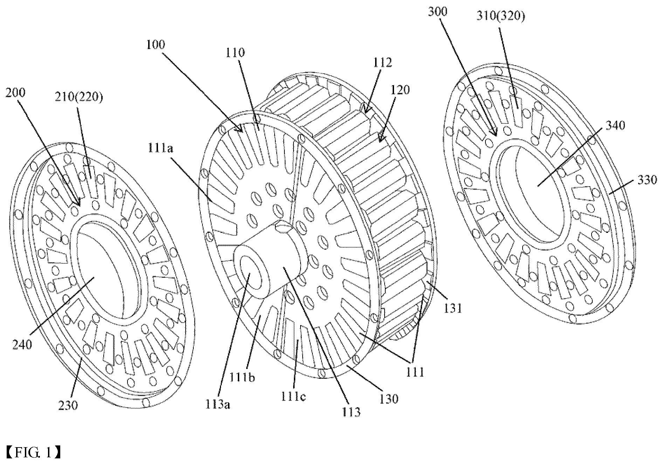

The present disclosure herein provides embodiments of a motor stator assembly and a synchronous motor. Referring to FIG. 1, a synchronous motor for generating an axial magnetic field is illustrated. The synchronous motor includes a motor stator assembly 100, a first rotor disc 200, a second rotor disc 300, and a drive shaft. The first rotor disc 200 and the second rotor disc 300 are respectively disposed on two sides of the stator base 110 in an axial direction; and the drive shaft passes through the first rotor disc 200, the motor stator assembly 100, and the second rotor disc sequentially in the axial direction 300.

More specifically, the motor stator assembly 100 shown in FIG. 1 includes a stator base 110 disposed axially around a motor drive shaft, the stator base 110 has a receiving space 112 and two stator end faces 111, and the receiving space 112 is disposed between the two stator end faces 111 and disposed along a circumferential outer side of the stator base 110. The motor stator assembly 100 further includes a plurality of coil assemblies 120 each inserted in the receiving space 112 in a radial direction of the stator base 110. In this arrangement, the stator base 110 and the coil assemblies 120 in the motor stator assembly 100 can be separately fabricated and subsequently assembled. The coil assemblies 120 are removed from the stator base 110 when they are required to be serviced or replaced. This enables service or replacement operation to be performed as needed, and makes the maintenance convenient and less time-consuming, while the motor stator assembly itself still has very reliable and efficient performance.

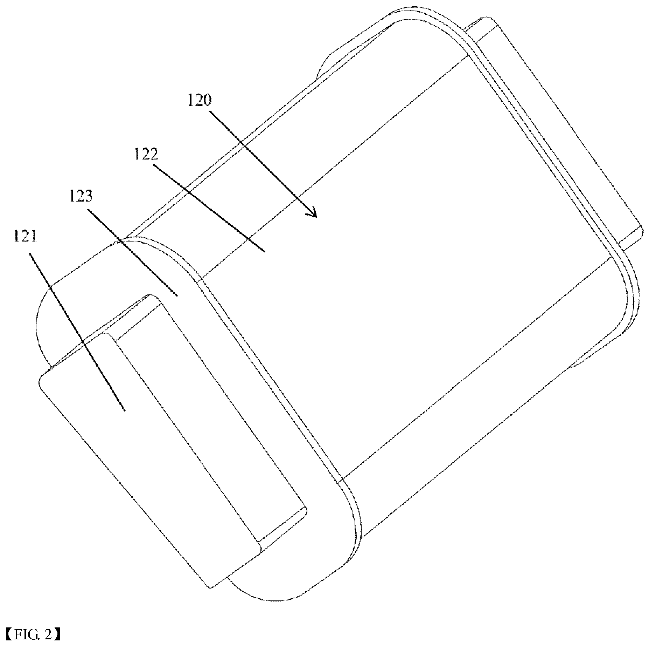

Referring again to FIG. 2, a specific configuration of the coil assembly 120 assembled in the motor stator assembly 100 is illustrated. The coil assembly 120 includes a core 121 extending in an axial direction, a coil disposed axially around the core 121, and a coil base 123 disposed axially around the core 121. The coil base 123 limits two axial ends of the coil. In this arrangement, the coil has a reliable positioning relative to the core so that an electromagnetic excitation effect can be stably and reliably generated when the coil is fitted into the stator base.

More specifically, the core 121 has an isosceles trapezoid-shaped cross section or a sector ring-shaped cross section in the axial direction so that when the cores 121 are uniformly arranged along a circumferential direction of the stator base of the motor stator assembly 100, a better matching is enabled, thereby ensuring work performance of the motor. In addition, as some optional specific configurations, the core 121 may be formed by laminating ferromagnetic materials; the coil may be made of a copper wire coated by an insulating layer; and the coil base 123 may be made of a flame retardant material having a temperature resistance of no less than 100°C.

Now turning to FIG. 1, an optional specific assembly arrangement of the coil assembly 120 and the stator base 110 is also illustrated. A plurality of positioning holes 111a are disposed in the stator end faces 111 of the stator base 110; wherein in an assembled state, the coil assemblies 120 are embedded in the positioning holes 111a of the stator base 110; and in a disassembled state, the coil assemblies 120 are conveniently removed out of the positioning holes 111a of the stator base 110.

More specifically, in order to ensure the electromagnetic excitation effect while facilitating the loading and unloading, a plurality of positioning holes 111a may be uniformly arranged in the stator end faces 111 in a circumferential direction; and at the same time, the coil assemblies 120 are uniformly embedded in the positioning holes 111a in the circumferential direction.

In addition, in order to ensure that the coil assemblies 120 do not fall off after being assembled to the receiving space in the stator base 110, a positioning ring 130 is disposed and sleeved over an outer edge of the stator end face 111. The positioning ring 130 is configured to restrict the coil assemblies 120 from being disengaged radially outward from the receiving space 112. On the basis of this, positioning protrusions 131 facing the receiving space 112 are circumferentially disposed on the positioning rings 130. After the positioning rings 130 are sleeved in place, the positioning protrusions 131 are just captured between adjacent coil assemblies 120, and therefore can be better configured to restrict the coil assemblies 120 from being disengaged radially outward from the receiving space 112.

Optionally, a drive sleeve 113 extending in an axial direction may be disposed in a middle portion of the stator base 110, and a drive shaft hole 113a is axially disposed in the drive sleeve 113 for the drive shaft to pass through.

Moreover, the stator base is integrally formed so as to improve product integration. In a comparative example not covered by the present invention, the stator end face 111 can also be formed by connecting a plurality of stator end face sections 111b, 111c, thereby facilitating manufacture and installation.

Although the motor stator assembly used in the synchronous motor in the foregoing embodiment has been described above with reference to FIG. 1, in fact, the motor stator assembly can be applied to other motors as long as there is no conflicting configuration.

Referring again to FIG. 1, other components of the synchronous motor will be described below.

For example, for the rotor discs disposed on both sides of the motor stator assembly 100, the first rotor disc 200 may be circumferentially provided with a plurality of permanent magnets 210 on a side thereof facing the stator base 110; and the second rotor disc 300 may be circumferentially provided with a plurality of permanent magnets and/or steel magnets 310 on a side thereof facing the stator base 110. In this arrangement, it is possible to select either a solution in which a permanent-magnet rotor is only used on one side of the motor stator assembly 100 and a magnetic steel rotor is used on the other side to reduce cost; or a solution in which permanent-magnet rotor is used on both sides of the motor stator assembly 100 at the same time to improve the performance.

Optionally, as a specific arrangement, the first rotor disc 200 is provided with a plurality of mounting slots 220, and a plurality of permanent magnets 210 are embedded in the mounting slots 220; and the second rotor disc 300 is provided with a plurality of mounting slots 320. A plurality of permanent magnets and/or steel magnets 310 are embedded in the mounting slots 320.

Optionally, as a specific arrangement, a positioning strip 230 may be disposed along a circumferential outer side on a side of the first rotor disc 200 that faces the stator base 110, a positioning strip 330 may be disposed along a circumferential outer side on a side of the second rotor disc 300 that faces the stator base 110, and positioning slots are disposed on two sides of the stator base 110, so that the positioning strip 230 and 330 are fitted into the positioning slots respectively and an accurate positioning between the stator base and the rotor disc is formed.

Further, the plurality of permanent magnets and/or the plurality of steel magnets are arranged on the rotor discs in a circumferential direction with positive poles and negative poles being alternated.

Optionally, a middle portion of the first rotor disc 200 may also be provided with a matching hole 240 extending in the axial direction for the drive shaft to pass through, and a middle portion of the second rotor disc 300 may also be provided with a matching hole 340 extending in the axial direction for the drive shaft to pass through.

Additionally, although not shown in the drawings, an embodiment of a passenger transport device is also provided herein. The passenger transport device, such as an elevator, may include a synchronous motor as described in any of the foregoing embodiments or as described in a combination of the foregoing embodiments, and thus also has corresponding technical effects. Details are not described herein again.

The motor stator assembly, synchronous motor, and passenger transport device according to the present disclosure are mainly described in the above examples. While only some of the embodiments of the present disclosure have been described, those skilled in the art will understand that the present disclosure can be carried out in many other forms without departing from the scope thereof. Therefore, the illustrated examples and embodiments should be considered as illustrative rather than limiting, and the present disclosure can cover various modifications and replacements without departing from the scope of the present disclosure defined by individual appended claims.

## Claims

1. A motor stator assembly (100) configured to generate an axial magnetic field, comprising:
an integrally formed stator base (110) disposed axially around a motor drive shaft, the stator base having a receiving space (112) and two stator end faces (111), and the receiving space (112) being disposed between the two stator end faces (111) and disposed along a circumferential outer side of the stator base (110);
a plurality of coil assemblies (120) each inserted in the receiving space (112) in a radial direction of the stator base (110);
positioning rings (130), which are sleeved over outer edges of the stator end faces (111) and configured to restrict the coil assemblies (120) from being disengaged radially outward from the receiving space (112); and
wherein positioning protrusions (131) facing the receiving space (112) are circumferentially disposed on the positioning rings (130), the positioning protrusions (131) are captured between adjacent coil assemblies (120), and are configured to restrict the coil assemblies (120) from being disengaged radially outward from the receiving space (112).

2. The motor stator assembly (100) according to claim 1, wherein a plurality of positioning holes (111a) are disposed in the stator end faces (111) of the stator base (110); wherein in an assembled state, the coil assemblies (120) are embedded in the positioning holes (111a) of the stator base (110); and in a disassembled state, the coil assemblies (120) are removed out of the positioning holes (111a) of the stator base (110).

3. The motor stator assembly (100) according to claim 2, wherein the plurality of positioning holes (110a) are uniformly arranged in the stator end faces (111) in a circumferential direction, and the coil assemblies (120) are uniformly embedded in the positioning holes (111a) in the circumferential direction.

4. The motor stator assembly (100) according to any preceding claim, wherein a drive sleeve (113) extending in an axial direction is disposed in a middle portion of the stator base, and a drive shaft hole (113a) is axially disposed in the drive sleeve (113).

5. The motor stator assembly (100) according to any preceding claim, wherein the coil assembly (120) comprises: a core (121) extending in an axial direction; a coil disposed axially around the core; and a coil base (123) disposed axially around the core (121); and wherein the coil base (123) limits two axial ends of the coil.

6. The motor stator assembly according to claim 5, wherein the core (121) has an isosceles trapezoid-shaped cross section or a sector ring-shaped cross section in the axial direction, and
Optionally wherein the core (121) is formed by laminating ferromagnetic materials, and/or
Optionally wherein the coil is made of a copper wire coated by an insulating layer, and/or
Optionally wherein the coil base (123) is made of a flame retardant material having a temperature resistance of no less than 100°C.

7. A synchronous motor, which is configured to generate an axial magnetic field, the synchronous motor comprising: the motor stator assembly (100) according to any one of claims 1 to 6; a first rotor disc (200) and a second rotor disc (300) respectively disposed on two sides of the stator base (110) in an axial direction; and a drive shaft which passes through the first rotor disc (200), the motor stator assembly (100), and the second rotor disc (300) sequentially in the axial direction.

8. The synchronous motor according to claim 7, wherein the first rotor disc (200) is circumferentially provided with a plurality of permanent magnets (210) on a side thereof facing the stator base (110); and/or the second rotor disc (300) is circumferentially provided with a plurality of permanent magnets (310) and/or steel magnets (310) on a side thereof facing the stator base (110).

9. The synchronous motor according to claim 8, wherein a plurality of mounting slots (220; 320) are disposed in the first rotor disc (200) and/or the second rotor disc (300), and the plurality of permanent magnets (210; 310) and/or steel magnets (210; 310) are embedded in the mounting slots (220; 320).

10. The synchronous motor according to claim 8 or 9, wherein the plurality of permanent magnets (210; 310) are arranged in a circumferential direction with positive poles and negative poles being alternated; and/or the plurality of steel magnets (210; 310) are arranged in a circumferential direction with positive poles and negative poles being alternated.

11. The synchronous motor according to any of claims 7-10, wherein a positioning strip (230; 330) is disposed along a circumferential outer side on a side of the first rotor disc (200) and/or the second rotor disc (300) that faces the stator base (110), and positioning slots are disposed on two sides of the stator base (110), the positioning strips (230; 330) being fitted into the positioning slots.

12. The synchronous motor according to any of claims 7-11, wherein a middle portion of the first rotor disc (200) and/or the second rotor disc (300) is provided with a matching hole (240; 340) extending in the axial direction for the drive shaft to pass through.

13. A passenger transport device, comprising the synchronous motor according to any one of claims 7 to 12.

## Patentansprüche

1. Motorstatorbaugruppe (100), die dazu ausgebildet ist, ein axiales Magnetfeld zu erzeugen, umfassend:
eine einstückig ausgebildete Statorbasis (110), die axial um eine Motorantriebswelle angeordnet ist, wobei die Statorbasis einen Aufnahmeraum (112) und zwei Statorendflächen (111) aufweist und wobei der Aufnahmeraum (112) zwischen den beiden Statorendflächen (111) und entlang einer umlaufenden Außenseite der Statorbasis (110) angeordnet ist;
eine Mehrzahl von Spulenbaugruppen (120), die jeweils in einer radialen Richtung der Statorbasis (110) in den Aufnahmeraum (112) eingesetzt sind;
Positionierringe (130), die über Außenkanten der Statorendflächen (111) gestülpt und dazu ausgebildet sind, ein Lösen der Spulenbaugruppen (120) radial nach außen aus dem Aufnahmeraum (112) zu verhindern; und
wobei Positioniervorsprünge (131), die dem Aufnahmeraum (112) zugewandt sind, in Umfangsrichtung an den Positionierringen (130) angeordnet sind, wobei die Positioniervorsprünge (131) zwischen benachbarten Spulenbaugruppen (120) aufgenommen und dazu ausgebildet sind, ein Lösen der Spulenbaugruppen (120) radial nach außen aus dem Aufnahmeraum (112) zu verhindern.

2. Motorstatorbaugruppe (100) nach Anspruch 1, wobei eine Mehrzahl von Positionierlöchern (111a) in den Statorendflächen (111) der Statorbasis (110) angeordnet ist; wobei in einem montierten Zustand die Spulenbaugruppen (120) in die Positionierlöcher (111a) der Statorbasis (110) eingebettet sind; und in einem demontierten Zustand die Spulenbaugruppen (120) aus den Positionierlöchern (111a) der Statorbasis (110) herausgenommen werden.

3. Motorstatorbaugruppe (100) nach Anspruch 2, wobei die Mehrzahl von Positionierlöchern (110a) gleichmäßig in einer Umfangsrichtung in den Statorendflächen (111) angeordnet ist und die Spulenbaugruppen (120) gleichmäßig in der Umfangsrichtung in die Positionierlöcher (111a) eingebettet sind.

4. Motorstatorbaugruppe (100) nach einem der vorhergehenden Ansprüche, wobei eine sich in einer axialen Richtung erstreckende Antriebshülse (113) in einem mittleren Abschnitt der Statorbasis angeordnet ist und ein Antriebswellenloch (113a) axial in der Antriebshülse (113) angeordnet ist.

5. Motorstatorbaugruppe (100) nach einem der vorhergehenden Ansprüche, wobei die Spulenbaugruppe (120) umfasst: einen sich in einer axialen Richtung erstreckenden Kern (121); eine axial um den Kern angeordnete Spule; und eine axial um den Kern (121) angeordnete Spulenbasis (123); und wobei die Spulenbasis (123) zwei axiale Enden der Spule begrenzt.

6. Motorstatorbaugruppe nach Anspruch 5, wobei der Kern (121) in der axialen Richtung einen gleichschenklig trapezförmigen Querschnitt oder einen sektorringförmigen Querschnitt aufweist, und
Optional wobei der Kern (121) durch Laminieren ferromagnetischer Materialien gebildet ist, und/oder Optional wobei die Spule aus einem mit einer Isolierschicht überzogenen Kupferdraht hergestellt ist, und/oder Optional wobei die Spulenbasis (123) aus einem flammhemmenden Material mit einer Temperaturbeständigkeit von nicht weniger als 100 °C hergestellt ist.

7. Synchronmotor, der dazu ausgebildet ist, ein axiales Magnetfeld zu erzeugen, wobei der Synchronmotor umfasst: die Motorstatorbaugruppe (100) nach einem der Ansprüche 1-6; eine erste Rotorscheibe (200) und eine zweite Rotorscheibe (300), die jeweils auf zwei Seiten der Statorbasis (110) in einer axialen Richtung angeordnet sind; und eine Antriebswelle, die nacheinander in der axialen Richtung durch die erste Rotorscheibe (200), die Motorstatorbaugruppe (100) und die zweite Rotorscheibe (300) verläuft.

8. Synchronmotor nach Anspruch 7, wobei die erste Rotorscheibe (200) an einer der Statorbasis (110) zugewandten Seite in Umfangsrichtung mit einer Mehrzahl von Permanentmagneten (210) versehen ist; und/oder die zweite Rotorscheibe (300) an einer der Statorbasis (110) zugewandten Seite in Umfangsrichtung mit einer Mehrzahl von Permanentmagneten (310) und/oder Stahlmagneten (310) versehen ist.

9. Synchronmotor nach Anspruch 8, wobei eine Mehrzahl von Montageschlitzen (220; 320) in der ersten Rotorscheibe (200) und/oder der zweiten Rotorscheibe (300) angeordnet ist und die Mehrzahl von Permanentmagneten (210; 310) und/oder Stahlmagneten (210; 310) in die Montageschlitze (220; 320) eingebettet ist.

10. Synchronmotor nach Anspruch 8 oder 9, wobei die Mehrzahl von Permanentmagneten (210; 310) in einer Umfangsrichtung mit abwechselnd positiven und negativen Polen angeordnet ist; und/oder die Mehrzahl von Stahlmagneten (210; 310) in einer Umfangsrichtung mit abwechselnd positiven und negativen Polen angeordnet ist.

11. Synchronmotor nach einem der Ansprüche 7-10, wobei ein Positionierstreifen (230; 330) entlang einer umlaufenden Außenseite an einer Seite der ersten Rotorscheibe (200) und/oder der zweiten Rotorscheibe (300), die der Statorbasis (110) zugewandt ist, angeordnet ist und Positionierschlitze an zwei Seiten der Statorbasis (110) angeordnet sind, wobei die Positionierstreifen (230; 330) in die Positionierschlitze eingepasst sind.

12. Synchronmotor nach einem der Ansprüche 7-11, wobei ein mittlerer Abschnitt der ersten Rotorscheibe (200) und/oder der zweiten Rotorscheibe (300) mit einem Passloch (240; 340) versehen ist, das sich in der axialen Richtung erstreckt, damit die Antriebswelle hindurchtreten kann.

13. Personentransportvorrichtung, umfassend den Synchronmotor nach einem der Ansprüche 7-12.

## Revendications

1. Ensemble stator de moteur (100) conçu pour générer un champ magnétique axial, comprenant :
une base de stator (110) formée d'une seul tenant disposée axialement autour d'un arbre d'entraînement de moteur, la base de stator ayant un espace de réception (112) et deux faces d'extrémité de stator (111), et l'espace de réception (112) étant disposé entre les deux faces d'extrémité de stator (111) et disposé le long d'un côté extérieur circonférentiel de la base de stator (110) ;
une pluralité d'ensembles de bobines (120) chacun inséré dans l'espace de réception (112) dans une direction radiale de la base de stator (110) ;
des anneaux de positionnement (130), qui sont gainés sur les bords extérieurs des faces d'extrémité de stator (111) et conçus pour empêcher les ensembles de bobines (120) de se désolidariser radialement vers l'extérieur de l'espace de réception (112) ; et
dans lequel les saillies de positionnement (131) faisant face à l'espace de réception (112) sont disposées circonférentiellement sur les anneaux de positionnement (130), les saillies de positionnement (131) sont capturées entre les ensembles de bobines (120) adjacents et sont conçues pour empêcher les ensembles de bobines (120) de se désolidariser radialement vers l'extérieur de l'espace de réception (112).

2. Ensemble stator de moteur (100) selon la revendication 1, dans lequel une pluralité de trous de positionnement (111a) sont disposés dans les faces d'extrémité de stator (111) de la base de stator (110) ; dans lequel, à l'état assemblé, les ensembles de bobines (120) sont encastrés dans les trous de positionnement (111a) de la base de stator (110) ; et à l'état désassemblé, les ensembles de bobines (120) sont retirés des trous de positionnement (111a) de la base de stator (110).

3. Ensemble stator de moteur (100) selon la revendication 2, dans lequel la pluralité de trous de positionnement (110a) sont uniformément disposés dans les faces d'extrémité de stator (111) dans une direction circonférentielle, et les ensembles de bobines (120) sont uniformément encastrés dans les trous de positionnement (111a) dans la direction circonférentielle.

4. Ensemble stator de moteur (100) selon l'une quelconque revendication précédente, dans lequel un manchon d'entraînement (113) s'étendant dans une direction axiale est disposé dans une partie centrale de la base de stator, et un trou d'arbre d'entraînement (113a) est disposé axialement dans le manchon d'entraînement (113).

5. Ensemble stator de moteur (100) selon l'une quelconque revendication précédente, dans lequel l'ensemble bobine (120) comprend : un noyau (121) s'étendant dans une direction axiale ; une bobine disposée axialement autour du noyau ; et une base de bobine (123) disposée axialement autour du noyau (121) ; et dans lequel la base de bobine (123) limite deux extrémités axiales de la bobine.

6. Ensemble stator de moteur selon la revendication 5, dans lequel le noyau (121) présente une section transversale trapézoïdale isocèle ou une section transversale annulaire sectorielle dans la direction axiale, et
éventuellement dans lequel, le noyau (121) est formé par laminage de matériaux ferromagnétiques, et/ou
éventuellement dans lequel, la bobine peut être constituée d'un fil de cuivre recouvert d'une couche isolante, et/ou éventuellement dans lequel la base de bobine (123) est fabriquée dans un matériau ignifuge ayant une résistance à la température d'au moins 100 °C.

7. Moteur synchrone, conçu pour générer un champ magnétique axial, le moteur synchrone comprenant : l'ensemble stator de moteur (100) selon l'une quelconque des revendications 1 à 6 ; un premier disque rotor (200) et un second disque rotor (300) disposés respectivement sur deux côtés de la base de stator (110) dans une direction axiale ; et un arbre d'entraînement qui traverse successivement le premier disque rotor (200), l'ensemble stator de moteur (100) et le second disque rotor (300) dans la direction axiale.

8. Moteur synchrone selon la revendication 7, dans lequel le premier disque rotor (200) est muni circonférentiellement d'une pluralité d'aimants permanents (210) sur une face de celui-ci faisant face à la base de stator (110) ; et/ou le second disque rotor (300) est muni circonférentiellement d'une pluralité d'aimants permanents (310) et/ou d'aimants en acier (310) sur une face de celui-ci faisant face à la base de stator (110).

9. Moteur synchrone selon la revendication 8, dans lequel une pluralité de fentes de montage (220 ; 320) sont disposées dans le premier disque rotor (200) et/ou le second disque rotor (300), et la pluralité d'aimants permanents (210 ; 310) et/ou d'aimants en acier (210 ; 310) sont encastrés dans les fentes de montage (220 ; 320).

10. Moteur synchrone selon la revendication 8 ou 9, dans lequel la pluralité d'aimants permanents (210 ; 310) sont disposés dans une direction circonférentielle avec des pôles positifs et des pôles négatifs alternés ; et/ou la pluralité d'aimants en acier (210 ; 310) sont disposés dans une direction circonférentielle avec des pôles positifs et des pôles négatifs alternés.

11. Moteur synchrone selon l'une quelconque des revendications 7 à 10, dans lequel une bande de positionnement (230 ; 330) est disposée le long d'un côté extérieur circonférentiel sur un côté du premier disque rotor (200) et/ou du second disque rotor (300) qui fait face à la base de stator (110), et des fentes de positionnement sont disposées sur deux côtés de la base de stator (110), les bandes de positionnement (230 ; 330) étant insérées dans les fentes de positionnement.

12. Moteur synchrone selon l'une quelconque des revendications 7 à 11, dans lequel une partie centrale du premier disque rotor (200) et/ou du second disque rotor (300) est munie d'un trou (240 ; 340) correspondant s'étendant dans la direction axiale pour permettre le passage de l'arbre d'entraînement.

13. Dispositif de transport de passagers comprenant le moteur synchrone selon l'une quelconque des revendications 7 à 12.
